# EUROPEAN PATENT APPLICATION

(11) **EP 1 494 398 A1**
(43) Date of publication of application: **05.01.2005**
(21) Application number: 04013704.4
(22) Date of filing: 11.06.2004
(51) Int. Cl.: H04L 12/28

(54) **Method and device for managing the transmission of data in a station of a wireless network**

(30) Priority: 01.07.2003 FR 0307930
(71) Applicant: Thomson Licensing S.A., 92100 Boulogne Billancourt (FR)
(72) Inventor: Jeanne, Ludovic, 92648 Boulogne Cedex (FR); Perrot, Sébastien, 92648 Boulogne Cedex (FR); Fontaine, Patrick, 92648 Boulogne Cedex (FR)
(74) Representative: Le Dantec, Claude

(57) **Abstract**

The present invention relates to a method for managing the transmission of data frames in a station of a wireless network and a station using said method. It applies to the stations of a wireless network of the 802.11 type. According to the invention, for each data frame, a frame descriptor is generated, the descriptors of the data frames to be transmitted during the contention-free time slot or the ATIM window are stored in at least one memory M1 of the station, and the descriptors of the data frames to be transmitted during the contention slot are stored in a memory M2. Then, during the contention-free slot or the ATIM window, the frames whose descriptors are stored in the memory M1 are sent, followed by the frames whose descriptors are stored in the memory M2 during the contention slot.

## Description

The present invention relates to a method for managing the transmission of data in a station of a wireless network. It applies more particularly to networks of the IEEE 802.11 type. It also relates to a station implementing said method.

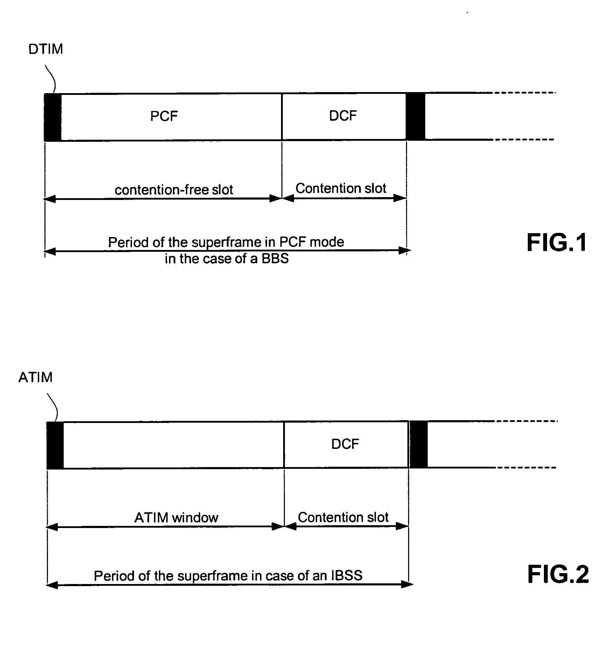

The IEEE 802.11 standard proposes two different network architectures: a first architecture with access point which serves mainly to connect IEEE 802.11 stations to networks of another type, for example of the Ethernet type, and a second architecture without access point which serves to create independent networks of IEEE 802.11 stations.
In the first architecture, a particular station, called an access point, manages the wireless stations within radio range. This access point is usually connected to a wired network. The stations of the network communicate with one another via this access point. They also communicate via this access point with the wired network. The IEEE 802.11 standard calls the set of wireless stations within radio range of the access point the BSS (Basic Service Set).
In the second architecture, the network operates in fully distributed manner. Each station can communicate with the stations within radio range. There is no access point. The IEEE 802.11 standard calls the set of wireless stations within mutual radio range the IBSS (Independent Basic Service Set).
For these two architectures, there are currently two possible modes of access to the channel, an access mode with competition called the DCF (Distribution Coordination Function) mode and a controlled access mode called PCF (Point Coordination Function) mode. The DCF mode is by nature distributed while the PCF mode is by nature centralized and based on a master station.
In the DCF mode, the station observes the activity of the radio channel before sending data packets. If it detects no activity, it sends the latter. Otherwise, it defers its transmission. This access mode can be used in the case of a BSS or of an IBSS.
The PCF mode is for its part of reservation type. Access to the channel is controlled by a particular station having a coordination function. This station is necessarily an access point. When a centralized coordination function is activated in the access point, all the stations in the coverage area of this access point must obey the rules of contention. This function implements a system of successive polling of the BSS stations. When a distributed coordination function is activated in the access point, all the stations in the coverage area of that access point obey the same rules of access as those of the DCF mode. During the PCF mode, the coordination function uses a superframe time structure. A representation of this superframe is given in Figure 1. The latter comprises two consecutive time slots: one time slot, called contention-free slot, during which access to the channel is without contention, followed by a time slot, called contention slot, during which access is identical to that of DCF mode. During the contention-free slot, the coordination function of the access point is centralized whereas during the contention slot, it is distributed. A beacon frame is sent at the beginning of the superframe to indicate the beginning of the contention-free slot. This beacon is of the DTIM (for Delivery Traffic Information Map) type. This superframe is used in the case of a BSS operating in PCF mode. For an IBSS, the structure of the superframe is different. It comprises a time slot, called in the rest of the description an ATIM window, during which the stations of the IBSS request an authorization to send frames of payload data, followed by a contention time slot during which said payload data frames are sent if the receiving station has authorized the transmission. The designation ATIM window comes from the fact that the frames to authorize sending are called ATIM (Ad Hoc Traffic Information Map) frames.
Thus, in the PCF mode, during the contention-free slot, the access point having the coordination point function may choose between different types of data transfer: it may choose to send and receive data frames, to send data frames only or to receive data frames only. In the first and last cases, the access point sends to the station an explicit authorization to send such as for example a data frame of ATIM type or a data frame of CF_Poll type.
Currently, all the data frames to be sent or descriptors of these frames are saved in a single memory of the station and the management of these frames is carried out by software, involving a relatively long processing time to find the data frames to be sent during the current slot (contention-free or with contention) of the superframe. This type of data processing is therefore not suitable for high bit rate transmissions.

According to the invention, a partly hardware solution is proposed to reduce this processing time.

According to the invention, it is proposed to improve the management of the data frames to be sent by storing them in distinct memories depending on whether they are to be sent during a contention-free time slot or an ATIM window or during a contention time slot.

The invention relates to a method for managing the transmission of data frames in a station of a wireless network during a time period comprising a contention-free time slot or a time slot dedicated to the transmission of ATIM data frames and a contention time slot, said data frames to be transmitted comprising or not comprising payload data. This method comprises the following steps:
- generating, for each data frame, a descriptor of said frame,
- storing, in at least a first memory of the station, the descriptors of the data frames to be transmitted during the contention-free time slot or the time slot dedicated to the transmission of ATIM data frames, then storing, in a second memory of the station distinct from said at least one first memory, the descriptors of the data frames to be transmitted during the contention time slot,
- sending, during the contention-free time slot or the time slot dedicated to the transmission of ATIM data frames, at least one of the data frames whose descriptors are stored in said at least one first memory, then sending, during the contention slot, at least one of the data frames whose descriptors are stored in the second memory.

The management of the data frames stored in the station is thus improved because the descriptors of the data frames to be sent during the contention-free slot or the time slot dedicated to the transmission of ATIM data frames and the descriptors of the data frames to be sent during the contention slot are located in distinct memories.

According to a preferred embodiment, the descriptors of the data frames, to be transmitted during the contention-free time slot or the time slot dedicated to the transmission of ATIM data frames, are stored in two distinct memories. The descriptors of the data frames comprising payload data are stored in said first memory and the descriptors of the data frames not comprising payload data are stored in a third memory.

According to a particular embodiment, during the contention-free time slot or a time slot dedicated to the transmission of ATIM data frames, the data frames whose descriptors are stored in the first memory are sent first followed by the data frames whose descriptors are stored in the third memory.

According to a particular embodiment, the data frames are sent in the order in which their descriptors are stored in said first and second memories and, where appropriate, in said third memory.

According to a particular embodiment, if the data frames whose descriptors are stored in said first memory have not been sent during a contention-free slot, they are sent during the contention slot that follows. Said data frames not sent during the contention-free slot are then sent during the contention slot, either after all the data frames whose descriptors are stored in the second memory have been sent during said contention slot, or before the latter are sent.

The payload data of the data frames to be sent are stored in at least one memory distinct from said first, second and, where appropriate, third memories of the station. According to a preferred embodiment, the payload data of the data frames to be transmitted during the contention-free time slot are stored in a fourth memory of the station and the payload data of the data frames to be transmitted during the contention time slot are stored in a fifth memory.

All the memories of the station are advantageously of the first-in, first-out type to further reduce the processing of the data frames to be sent.

The invention also relates to a station of a wireless network intended to transmit data frames during a time period comprising a contention-free time slot or a time slot dedicated to the transmission of ATIM data frames, followed by a contention time slot, said data frames to be transmitted comprising payload data or not. It comprises:
- means for generating, for each data frame, a descriptor of said frame,
- at least a first memory for storing the descriptors of the data frames to be transmitted during the contention-free time slot or the time slot dedicated to the transmission of ATIM data frames,
- a second memory distinct from said at least one first memory, for storing the descriptors of the data frames to be transmitted during the contention slot,
- means for sending, during the contention-free slot or the time slot dedicated to the transmission of ATIM data frames, at least one of the data frames whose descriptors are stored in said at least one first memory, then, during the contention slot, at least one of the data frames whose descriptors are stored in the second memory.

According to a particular embodiment, the station comprises, in addition to said first memory, a third memory for storing the descriptors of the data frames to be transmitted during the contention-free time slot or the time slot dedicated to the transmission of ATIM data frames. The descriptors of the data frames comprising payload data are stored in the first memory and the descriptors of the data frames not comprising payload data are stored in the third memory.

The station also comprises a fourth memory for storing the payload data of the data frames to be transmitted during the contention-free time slot and a fifth memory for storing the payload data of the data frames to be transmitted during the contention time slot.

The invention will be better understood and other features and advantages will emerge on reading the description that follows, the description making reference to the appended drawings in which:
- Figure 1, already described, is a schematic representation of a superframe in PCF mode in the case of a BSS;
- Figure 2, already described, is a schematic representation of a superframe in the case of an IBSS;
- Figure 3 shows an example of operation of the PCF mode in the case of a BSS;
- Figure 4 shows the content of the memories of the access point at the beginning of the contention-free slot from the example in Figure 3;
- Figure 5 represents a flowchart illustrating the read order of the memories in a station, and
- Figure 6 represents a station implementing the method of the invention.

According to the invention, descriptors of data frames to be sent are stored in different memories depending on the time period during which the frames are to be sent. The descriptors of the data frames to be transmitted during a contention-free time slot or an ATIM window are not stored in the same memory as the descriptors of the data frames to be transmitted during a contention slot.
The descriptors stored in these memories comprise a certain amount of information on the content of the data frames associated with them, to ascertain for example whether or not the frame contains payload data, and the way of transmitting them, for example the type of modulation to employ to modulate the payload data of the frame.

According to the invention, provision is therefore made in each station of the wireless network for at least one memory M1 to save the descriptors of the data frames to be transmitted during the contention-free slot or an ATIM window, and one memory M2 to save the descriptors of the data frames to be transmitted during the contention slot.

According to a preferred embodiment, the descriptors of the data frames to be transmitted during the contention-free slot or the ATIM window are saved in two memories: the memory M1 is for example used for storing the descriptors of the data frames comprising the payload data and another memory, denoted M3, is used to store the descriptors of the data frames not comprising payload data. Each station is thus furnished with three memories for storing the frame descriptors. It also comprises at least one memory for saving the payload data of these frames. Advantageously, the payload data of the data frames to be sent during the contention-free slot are saved in a memory M4 and the payload data of the data frames to be sent during the contention slot are saved in a memory M5. The use of several memories to save the descriptors and the payload data greatly simplifies the management of the data frames to be transmitted and significantly reduces their processing time in the station.
It should be noted that the station will not necessarily use the three memories M1, M2 and M3. If the station is an access point, it uses the three memories; otherwise, it will use only two of them.
In an access point of a BSS, the memory M1 contains the descriptors of data frames of the "Data" or "Data+CF-Poll" type; the memory M2 contains the descriptors of frames of the "Data" type and the memory M3 contains the descriptors of frames of the "CF-Poll" type. The "CF-poll" instruction is an invitation to send delivered by the access point. "CF-poll(st1)" will also be used in the rest of the description to indicate that it is the st1 station that is invited to send.
In a station of a BSS, the memories M1 and M2 contain the descriptors of data frames of the "Data" type and the memory M3 is empty.
Finally, in a station of an IBSS, the memory M1 is empty; the memory M2 contains the descriptors of frames of the "Data" type and the memory M3 contains the descriptors of data frames of the ATIM type. Naturally, in this case, provision can be made to fill the memory M1 instead of the memory M3.

The frame descriptors are stored as and when they are generated in the memories M1 to M3 and the payload data relating thereto are stored in the memories M4 and M5.
The data frames are then sent in the following order:
- during the contention-free slot or the ATIM window of the superframe, the data frames whose descriptors are stored in the memory M1 are sent first. When the memory M1 is empty, the data frames whose descriptors are stored in the memory M3 are then sent;
- during the contention slot, the data frames whose descriptors are stored in the memory M2 are sent.
   The memories M1 to M5 of the station are advantageously memories of the first-in, first-out type. The data frames are therefore sent in the order in which they are stored.

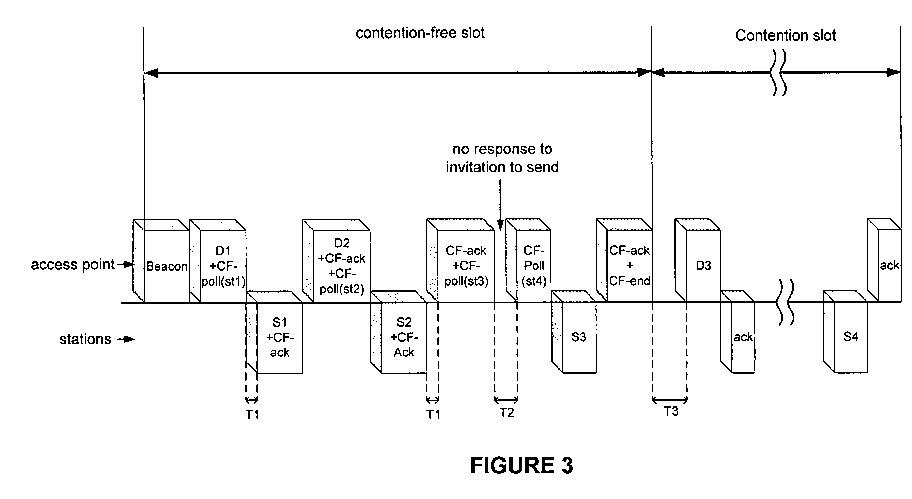

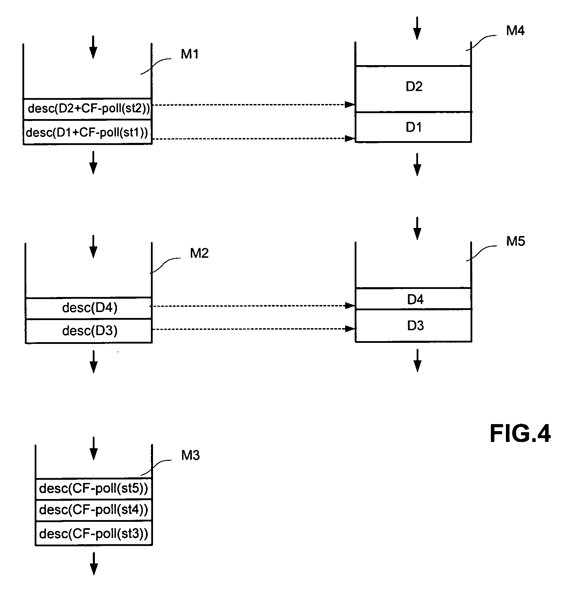

The method of the invention will now be described using an example of transmission of data frames between a station serving as an access point and several other stations, denoted st1, st2, st3, st4 and st5, of a wireless network operating in PDF mode. This example is represented in Figure 3. The payload data sent by the access point are denoted Di and those sent by the other stations of the network are denoted Si, i being an integer. The content of the memories M1 to M5 of the access point at the beginning of the contention-free slot is shown in Figure 4. The memory M1 contains two frame descriptors: one descriptor of the frame D1 +CF-poll(st1 ) and one descriptor of the frame D2+CF-poll(st2). The payload data D1 and D2 are saved in the memory M4. The memory M2 contains two other frame descriptors: one descriptor of the frame D3 and one descriptor of the frame D4. The payload data D3 and D4 are saved in the memory M5. Finally, the memory M3 contains the descriptors of the invitations to send CF-poll(st3), CF-poll(st4) and CF-poll(st5). These descriptors point to zero payload data (not shown) because the invitations to send sent by the access point do not comprise payload data.
All these data frames will be sent as shown in Figure 3. At the beginning of the superframe, the access point sends a beacon DTIM to mark the beginning of the contention-free slot. It then reads the memory M1. It then sends the data D1 to the station st1 and then invites it to send. The station st1 then returns the data S1 and an acknowledgement CF-ack. It should be noted that an interframe without transmission of duration T1 is observed between each transmission of data frames. Through the frame CF-ack is a control frame added by the control layers of the station. The access point then continues its read of the memory M1 and sends the data D2 to the station st2 and then invites it to send. It also sends an acknowledgement CF-ack to the station st1. The station st2 returns data S2 and an acknowledgement CF-ack.
The memory M1 now being empty, the access point then reads the memory M3. It sends an acknowledgement CF-ack to the station st2 and invites the station st3 to send. Having had no response from the station st3 after a delay of duration T2, the access point then invites the station st4 to send. In response, the station st4 returns the payload data S3. The point returns an acknowledgement CF-ack to the station st4 but does not invite the station st5 to send because the contention-free slot is finishing. Furthermore it sends a control frame CF-end to mark the end of the contention-free slot.
During the contention slot that follows, after an interframe of duration T3 greater than T1 and T2, the access point reads the memory M2 and therefore sends the payload data D3 stored in the memory M5 to a station of the network which acknowledges by returning a control frame ack. During this slot, the access point also sends payload data D4 to a station of the network. At the end of the slot, a station sends data S4 to the access point which acknowledges. If the memory M1 is not empty, provision is made advantageously to send the data frames that it contains during the contention slot. These frames may be sent after or before the data frames of the memory M2.

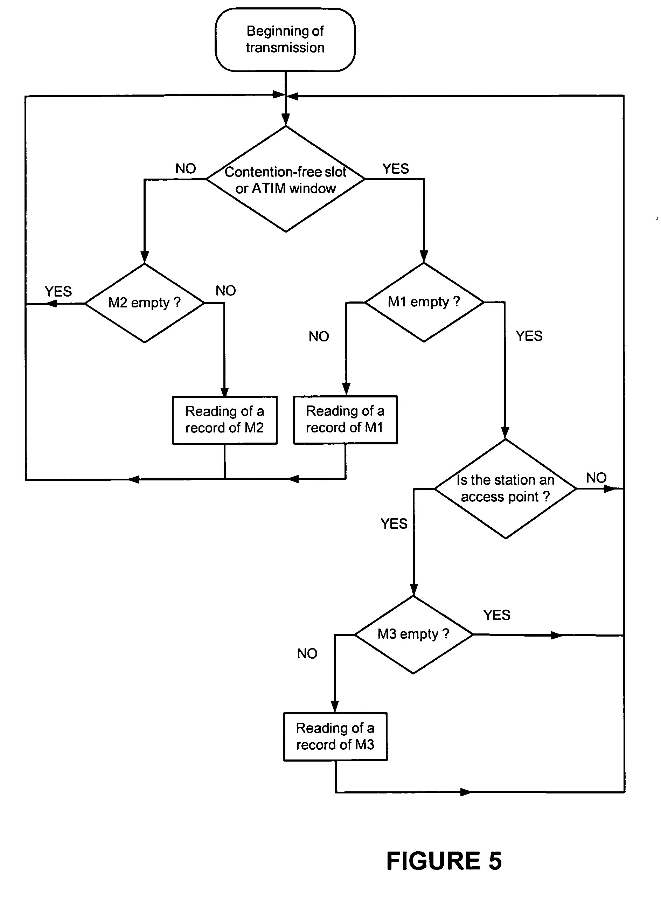

A flowchart summarizing the order of reading the memories M1, M2 and M3 is shown in Figure 5 in the case of a BSS or of an IBSS. At the beginning of the contention-free slot, the memory M1 is read first. If the latter is empty and if the station is an access point, the memory M3 is read next. Then, during the contention slot, the memory M2 is read. As indicated previously, provision may also be made to read the memory M1 during the contention slot if the latter has not been entirely during the preceding contention-free slot.

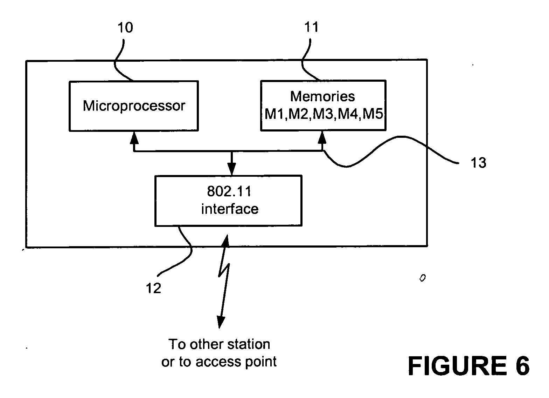

A station capable of implementing the method of the invention is shown schematically in Figure 6. It comprises a microprocessor 10, memories M1, M2, M3, M4 and M5 grouped in a memory block 11 to save the descriptors of the data frames to be sent and the payload data relating to them, and a network interface 12 to communicate with another station or the access point of the network. The elements 10, 11 and 12 of the station communicate with one another via a bus 13. The memory management described previously is carried out in the microprocessor 10.

## Claims

1. Method for managing the transmission of data frames in a station of a wireless network during a time period containing a contention-free time slot or a time slot dedicated to the transmission of ATIM data frames followed by a contention time slot, said data frames to be transmitted comprising or not comprising payload data, **characterized in that** it comprises the following steps:
- generating, for each data frame, a descriptor of said frame,
- storing, in at least a first memory (M1) of the station, the descriptors of the data frames to be transmitted during the contention-free time slot or the time slot dedicated to the transmission of ATIM data frames, then storing, in a second memory (M2) of the station distinct from said at least one first memory, the descriptors of the data frames to be transmitted during the contention time slot,
- sending, during the contention-free time slot or the time slot dedicated to the transmission of ATIM data frames, at least one of the data frames whose descriptors are stored in said at least one first memory, then sending, during the contention slot, at least one of the data frames whose descriptors are stored in the second memory.

2. Method according to Claim 1, **characterized in that** the descriptors of the data frames, to be transmitted during the contention-free time slot or the time slot dedicated to the transmission of ATIM data frames, are stored in two distinct memories, the descriptors of the data frames comprising payload data being stored in said first memory (M1) and the descriptors of the data frames not comprising payload data being stored in a third memory (M3).

3. Method according to Claim 2, **characterized in that**, during the contention-free time slot or the time slot dedicated to the transmission of ATIM data frames, the data frames whose descriptors are stored in the first memory (M1 ) are sent first followed by the data frames whose descriptors are stored in the third memory (M3).

4. Method according to one of Claims 1 to 3, **characterized in that** the data frames are sent in the order in which their descriptors are stored in said first and second memories and, where appropriate, in said third memory.

5. Method according to Claim 3 or Claim 4, itself dependent on Claim 2 or 3, **characterized in that**, if the data frames whose descriptors are stored in said first memory (M1) have not been sent during the contention-free slot, they are sent during the contention slot that follows.

6. Method according to Claim 5, **characterized in that** said data frames whose descriptors are stored in said first memory (M1), not sent during the contention-free slot, are sent during the contention slot that follows, after all the data frames whose descriptors are stored in the second memory (M2) have been sent during said contention slot.

7. Method according to Claim 5, **characterized in that** said data frames whose descriptors are stored in said first memory (M1), not sent during the contention-free slot, are sent during the contention slot that follows, before the data frames whose descriptors are stored in the second memory (M2) are sent during said contention slot.

8. Method according to one of the preceding Claims 1 to 7, **characterized in that** the payload data of the data frames are stored in at least one memory distinct from said first, second and, where appropriate, third memories of the station.

9. Method according to Claim 8, **characterized in that** the payload data of the data frames to be transmitted during the contention-free time slot are stored in a fourth memory (M4) of the station and the payload data of the data frames to be transmitted during the contention time slot are stored in a fifth memory (M5) of the station, the fourth and fifth memories being distinct from said first, second and third memories.

10. Method according to one of Claims 1 to 9, **characterized in that** the memories of the station are of the first-in, first-out type.

11. Method according to one of the preceding claims, **characterized in that** the wireless network is of the 802.11 type.

12. Station of a wireless network intended to transmit data frames during a time period containing a contention-free time slot or a time slot dedicated to the transmission of ATIM data frames followed by a contention time slot, said data frames to be transmitted comprising or not comprising payload data, **characterized in that** it comprises:
- means (10) for generating, for each data frame, a descriptor of said frame,
- at least one first memory (M1 ) for storing the descriptors of the data frames to be transmitted during the contention-free time slot or the time slot dedicated to the transmission of ATIM data frames,
- a second memory (M2) distinct from said at least one first memory, for storing the descriptors of the data frames to be transmitted during the contention slot,
- means (12) for sending, during the contention-free slot or the time slot dedicated to the transmission of ATIM data frames, at least one of the data frames whose descriptors are stored in said at least one first memory, then, during the contention slot, at least one of the data frames whose descriptors are stored in the second memory.

13. Station according to Claim 12, **characterized in that** it comprises, in addition to said first memory (M1), a third memory (M3) for storing the descriptors of the data frames to be transmitted during the contention-free time slot or the time slot dedicated to the transmission of ATIM data frames, the descriptors of the data frames comprising payload data being stored in said first memory (M1) and the descriptors of the data frames comprising no payload data being stored in the third memory (M3).

14. Station according to Claim 12 or 13, **characterized in that** it also comprises a fourth memory (M4) for storing the payload data of the data frames to be transmitted during the contention-free time slot and a fifth memory (M5) for storing the payload data of the data frames to be transmitted during the contention time slot.
